(19) Europäisches Patentamt
European Patent Office
Office européen des brevets

(11) **EP 2 223 476 B1**

(12) **EUROPEAN PATENT SPECIFICATION**

(45) Date of publication and mention
of the grant of the patent:
**13.04.2011 Bulletin 2011/15**

(51) Int Cl.:
***H04L 12/56*** *(2006.01)*

(21) Application number: **08864085.9**

(22) Date of filing: **27.11.2008**

(86) International application number:
**PCT/SE2008/051367**

(87) International publication number:
**WO 2009/082334 (02.07.2009 Gazette 2009/27)**

(54) **METHOD AND ARRANGEMENT IN A TELECOMMUNICATION SYSTEM**

VERFAHREN UND ANORDNUNG IN EINEM TELEKOMMUNIKATIONSSYSTEM

PROCÉDÉ ET AGENCEMENT DANS UN SYSTÈME DE TÉLÉCOMMUNICATION

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **20.12.2007 US 15331**

(43) Date of publication of application:
**01.09.2010 Bulletin 2010/35**

(73) Proprietor: **Telefonaktiebolaget LM Ericsson (publ)**
**164 83 Stockholm (SE)**

(72) Inventors:
• **NYLANDER, Tomas**
**S-SE-139 34 Värmdö (SE)**
• **STJERNHOLM, Paul**
**S-SE-181 60 Lidingö (SE)**

(74) Representative: **Kühn, Friedrich Heinrich**
**Ericsson AB**
**Patent Unit LTE**
**Torshamnsgatan 23**
**164 80 Stockholm (SE)**

(56) References cited:
**US-A- 5 450 394     US-A- 5 878 032**

**Description**

Technical Field

The present invention relates to a method and arrangement in a telecommunication system, in particular to an enabling mechanism for Quality-of-Service (QoS) measurements in a mobile telecommunication system.

Background

Specification is ongoing in the 3rd Generation Partnership Project (3GPP) for E-UTRAN (Evolved Universal Terrestrial Radio Access Network), which is the next generation of Radio Access Network. Another name used for E-UTRAN is the Long Term Evolution (LTE) Radio Access Network (RAN). A radio base station in this concept is called an eNB (E-UTRAN NodeB). The core network in LTE is also evolved, and this is referred to as System Architecture Evolution (SAE).

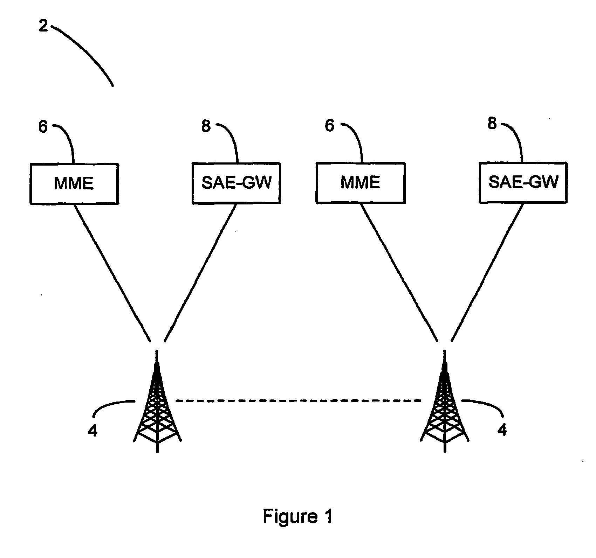

Figure 1 schematically illustrates the architectural model of a telecommunications network 2 as specified, e.g. in 3GPP TS 36.300 (i.e. the E-UTRAN).

The network 2 comprises a plurality of radio base stations 4, and a plurality of so-called mobility management entities (MMEs) 6. In the illustrated embodiment, only two radio base stations and only two MMEs are shown; however, it will be apparent to those skilled in the art that any number of such network nodes is contemplated, and in practice a network will have many more MMEs and radio base stations.

Each radio base station 4 is connected to one or more other radio base stations over interfaces known as X2 interfaces (shown as a dashed line in Figure 1). Each radio base station 4 is further connected to one or more MMEs 6 over interfaces known as S1 interfaces (shown as solid lines in Figure 1). The radio base stations 4 may be connected to the same MME 6, or to different MMEs 6 as shown in Figure 1.

Each radio base station 4 is also connected to one or more system architecture evolution gateways (SAE-GW) 8, including serving gateways (S-GWs) and public data network gateways (P-GWs), via S1 interfaces.

The user plane for S1 and X2 interfaces is based on GTP tunnels, i.e. 'user data'/GTP/UDP/IP. S1 and X2 interfaces traverse over IP networks where performance, such as delay, is unknown. Also, in many cases IP security (IPsec) is used to achieve secure signalling on S1 and X2 interfaces. In those cases a Security Gateway (SEGW) will also encrypt/decrypt the payload and potentially add to the delay. The delay may further depend on the traffic load and the DiffServ Code Point (DSCP) assigned to the IP transport service.

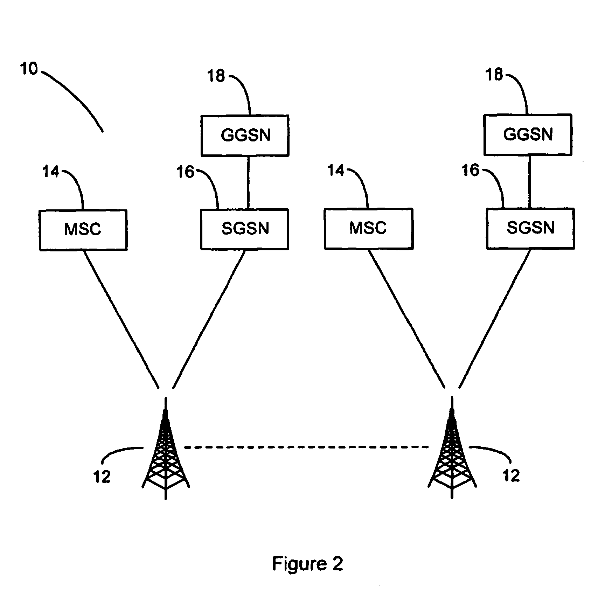

Figure 2 shows a further telecommunications network 10, known as a Universal Terrestrial Radio Access Network (UTRAN) with the so-called "flat" architecture.

The UTRAN 10 comprises a plurality of radio base stations 12, each connected to one or more mobile switching centres (MSCs) 14, and one or more serving GPRS support nodes (SGSNs) 16 over Iu interfaces. The SGSNs 16 are further connected to gateway GPRS support nodes (GGSNs) 18, which act as the gateway between the UTRAN and other networks.

In conventional UTRANs, each radio base station is further connected to a radio network controller (RNC). However, in the illustrated "flat" architecture, the functionality of the RNC is incorporated into the radio base station.

In the UTRAN 10, therefore, GTP is also used as a tunnelling protocol to transport user payload over the interfaces between the radio base stations 12 and the SGSNs 16, and between the SGSNs 16 and the GGSNs 18. The RNC (incorporated into the radio base station 12), the SGSN 16 and the GGSN 18 all implement GTP-U for user plane data traffic. The SGSN 16 and the GGSN 18 also implement GTP-C for control signalling.

Although it is well known to measure quality (delay) in ATM and Frame Relay networks, see for example document US 5,878,032, it has been observed to be a problem that the GPRS Tunnelling Protocol (GTP), e.g. as defined in 3GPP TS29.060, has no specified procedures, methods or messages to obtain a certain measure of quality, e.g. a delay on the user plane.

Summary

According to embodiments of the present invention, a first network element of a telecommunications network may determine latency between itself and a second network element by receiving from the second network element a message comprising a time stamp. Upon receiving the message, the first network element obtains a second time stamp and, based on the first and second time stamps determines the time taken for the message to be sent from the second network element to the first network element.

According to a further embodiment, the message from the second network element is triggered by an earlier message sent from the first network element to the second network element. The earlier message may itself comprise a time stamp such that, when the second network element receives the earlier message, it can obtain another time stamp and calculate the time taken for the earlier message to be sent from the first network element to the second network element.

In further embodiments, the message sent from the second network element includes the time taken for the earlier message to be sent from the first network element to the second network element. In this way, the first network element can calculate the time taken for the second network element to receive the earlier message, and send the further message, so gaining a measure of the load of the second network element.

In an alternative aspect, this same objective may be achieved by sending a first message from a first network element to a second network element, and receiving at the first network element a second message from the second network element. The second message contains an indication of the period of time between the second network element receiving the first message, and sending the second message.

According to further embodiments, the messages sent between the first and second network elements are 'Echo Request' and 'Echo response' messages of the GPRS Tunnelling Protocol (GTP), extended with time stamps and delay calculations such that a receiving end can determine the transmission time and be informed about the delay in the other direction. Alternatively, the GTP protocol could be extended with dedicated messages and parameters for quality measurements.

The present invention allows the advantage of obtaining knowledge about the quality on the transport links where GTP is used as a tunnelling protocol, e.g. in LTE/SAE, for the user plane of the S1 and X2 protocols, or over the lu interface in UTRAN, whereby said quality can be used by other functions that need knowledge about QoS, e.g. the best path or node to use, or to indicate performance issues.

Other objects, advantages and novel features of the invention will become apparent from the following detailed description of the invention when considered in conjunction with the accompanying drawings.

Brief description of the drawings

For a better understanding, reference is made to the following drawings and preferred embodiments of the invention.

Figure 1 shows an architectural model for an evolved UTRAN Radio Access Network.

Figure 2 shows an architectural model for a "flat" UTRAN network.

Figure 3 illustrates a signalling diagram of one embodiment of the present invention.

Figure 4 illustrates a signalling diagram of another embodiment of the present invention.

Figure 5 illustrates a signalling diagram of a further embodiment of the present invention.

Detailed description

Embodiments of the present invention provide a method for determining latency between a source node of a telecommunications network and a target node of that network, for example as described with respect to Figures 1 and 2. The source node and target node may be any of the following, as described in greater detail below: a radio base station, a SAE-GW, an RNC, an SGSN or a GGSN, depending on the type of telecommunications network in which the method is employed.

According to one embodiment of the present invention, a message is sent from the source node to the target node, with the message comprising a time stamp of the time at which it is sent. Upon receiving the message, the receiving node may determine how long it took to arrive by obtaining another time stamp and calculating the difference between the two time stamps.

According to further embodiments, the target node then sends a second message back to the source node, the second message comprising a time stamp of the time at which it was sent. The source node may then itself obtain another time stamp and determine the time the second message took to arrive. The source node may then go on to determine the length of time the target node took to process the first message, and so gain a measure of the workload of the target node.

There already exist 'Echo Request' and 'Echo response' messages in the GPRS tunnelling protocol; however, these messages are conventionally only used to check that the peer is alive and cannot be used to check the performance on the path, e.g. the delay. The 'Echo Request' and 'Echo response' messages as defined in 3GPP TS29.060 have only the possibility of sending one or more "private extensions", i.e. one or more optional information elements that may be included in any GTP signalling message. According to one embodiment of the present invention, however, these messages may be expanded to include the time stamps and/or indications of delay in the telecommunications network, as described in greater detail below. In alternative embodiments, new dedicated messages may be defined for carrying such information.

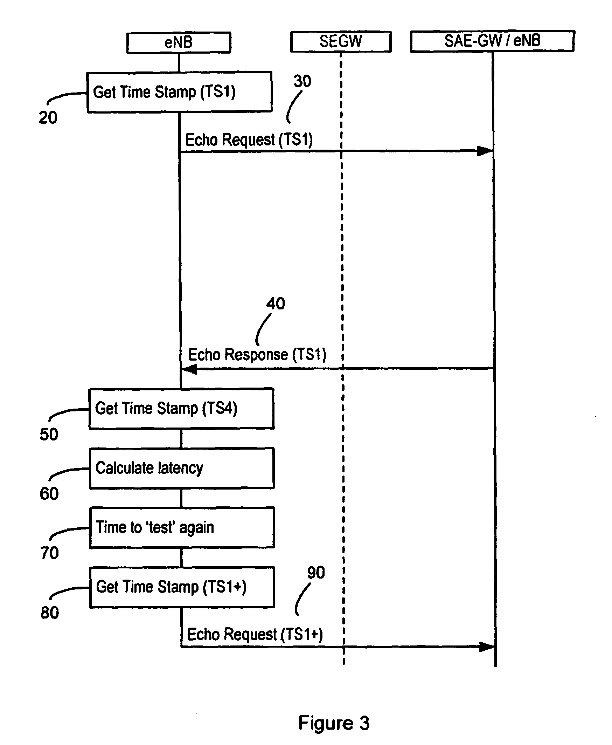

Figure 3 describes in general, non-limiting terms the steps of a method according to one embodiment of the present invention. It should be noted that not all method steps need to be present in all conceivable embodiments of the present invention and that certain embodiments may imply additional method steps to be added to one or more of the steps described below. Furthermore, although the embodiments below will be described in relation to an evolved UTRAN Radio Access Network, it will be appreciated that the invention is also applicable to any communications network.

The source node (i.e. the sending node) has access to a time source, such as a Network Time Protocol (NTP) server, or a local clock running on the source node. In this embodiment, it is not important that the time source be accurately synchronized with any other external time source.

In step 20, the source node obtains a time stamp TS1 from the time source.

In step 30, the source node sends a first message to the receiving target node (i.e. destination node), that includes the time stamp TS1. For example, the first message may be an Echo Request message that has been extended to include the time stamp.

Upon receiving the first message, in step 40 the target node sends a second message back to the source node, including the time stamp TS1. For example, the second message may be an Echo Response message that has been extended to include the time stamp TS1.

In step 50, upon receiving the second message, the source node obtains a further time stamp TS4 from the time source. In step 60, the source node then calculates the latency for communications between the source node and the target node. In this case, the latency is a 'round trip' time for a message to be sent from the source node to the target node, processed at the target node, and then sent back to the source node.

In step 70, the method is repeated, for example, after a predetermined period of time.

So, in step 80, the source node again obtains a time stamp TS1+ from the time source, and in step 90 sends a message to the target node that includes the time stamp TS1+.

It is noted that the signalling and payload described in the example above may or may not pass through a Security Gateway (SEGW).

The method as described in Figure 3 therefore shows a method of determining latency of communications (e.g. GTP communications) between two nodes of a telecommunications network.

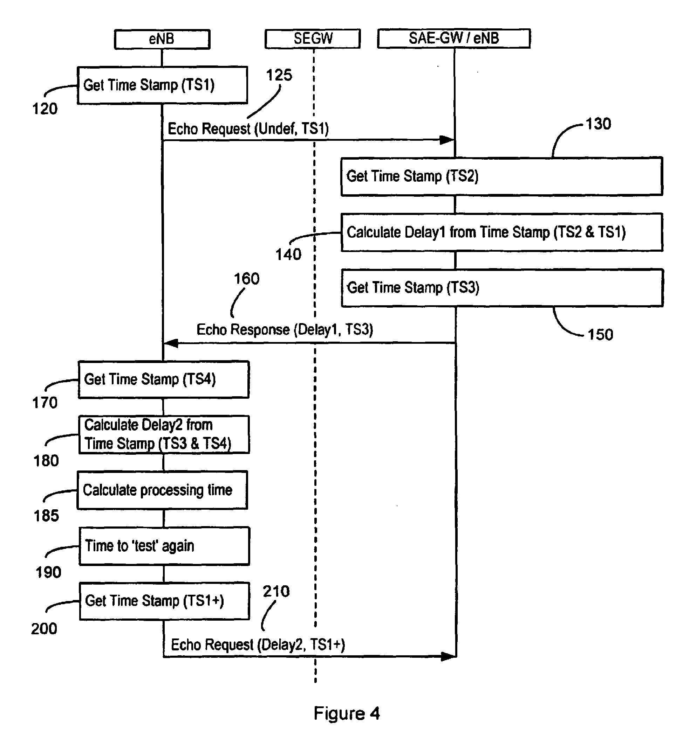

Figure 4 shows a signalling diagram of a method according to another embodiment of the present invention. Again, it should be noted that not all method steps need to be present in all conceivable embodiments of the present invention and that certain embodiments may imply additional method steps to be added to one or more of the steps described below. Furthermore, although the embodiments below will be described in relation to an evolved UTRAN Radio Access Network, it will be appreciated that the invention is also applicable to any communications network.

In this embodiment, both the source node (i.e. sending node) and the receiving target node (i.e. destination node) have access to a synchronized time source, such as a Network Time Protocol (NTP) server or to one of a plurality of synchronized NTP servers, so that the correct time can be obtained. In one embodiment, this means that whenever a time stamp is required, the node specifically requests one from the external synchronized time source. In other embodiments, the source node and the receiving target node have access to a synchronized time source (such as an NTP server), and use this access to maintain an accurate local time. Accurate time stamps may then be obtained quickly from the local time source.

In step 120, the source node fetches a time stamp TS1 from the synchronized time source, or from a local time source as described above.

The source node then sends a message including the time stamp TS1 to the target node, step 125, for example using an Echo Request message. Since this is the first Echo Request message being sent from the source node to the target node in this example, the optional "Delay" parameter in the Echo Request message is undefined. The Echo Request message is sent with a priority that is the same as or less than other user plane messages. If Differentiated Services (DiffServ) or a similar method is used to achieve soft QoS in the IP network, the DiffServ Code Point (DSCP) may be used to define the priority level.

In step 130, the receiving target node fetches a time stamp TS2 from the synchronized time source, or from a local time source. If the procedure is executed over the X2 interface, for example, the target node would be another eNB. If executed over the S1 interface the target node is a SAE-GW.

After fetching the time stamp TS2, in step 140, the target node calculates the time (Delay1) that the message took to be sent from the source node to the target node. This step may be handled with a priority that is below or equal to the priority of normal traffic handling at the target node, since then the delay added by the target node handling would provide an indication of the load on that node, i.e. the response time of the target node could be implicitly derived as described in greater detail below. As mentioned above, this may be achieved through use of an appropriate DSCP in the Echo Request message.

At this point, the target node now has knowledge about the time delay (Delay1) between the source node and the target node. Further steps are optional, in order that the source node may obtain knowledge of the time delay between the target node and the source node, or that the source node may obtain knowledge of the workload of the target node.

The target node optionally fetches a time stamp TS3, step 150, from the synchronized time source, or from its local time source. In one embodiment this step is performed if the processing time in the target node is significant. This would be the case, e.g. if step 140 is executed on a low priority level (e.g. as a background job with low priority) and hence takes some time to perform.

In step 160 the target node sends a reply message, for example an Echo Response message, to the source node including the calculated delay (Delay 1) and the time stamp TS3 of when the message was sent using the same DSCP as the invoking Echo Request message.

In step 170 the source node fetches a new time stamp TS4 from the synchronized time source, or from its local time source.

In step 180, the source node calculates the delay (Delay2) it sees by using the received time stamp TS3 and the time stamp TS4 from the synchronized time source, or local time source. That is, the source node calculates the time taken for the reply message to be sent from the target node to the source node.

The introduction of the first optional parameter in the Echo Request message provides information of the delay experienced by the remote node and can remove, for some embodiments of the present invention, the need for both nodes to perform an Echo Request/ Response procedure. Thus, in step 185, this option together with the optional step 150 also allows the processing delay T0 in the target node to be derived as

$$T0 = T4 - T1 - Delay1 - Delay2$$
$$= T3 - T1 - Delay1$$

This processing delay T0 then gives an implicit indication of the workload of the target node, as the priority of processing Delay1 in the target node may be set below or equal to the priority of handling ordinary traffic. In fact, the priority may be set at any level that is equal to or less than that of a type of traffic that is to be evaluated. For example, if the workload of the target node in handling traffic type A is to be evaluated, the priority of the Echo Request message is set equal to or less than the priority of traffic type A; if the workload of the target node in handling traffic type B is to be evaluated, the priority of the Echo Request message is set equal to or less than the priority of traffic type B, and so on.

Steps 190, 200 and 210 show the beginning of the above method steps being repeated when it is time to perform an echo test again. For example, in step 200 the source node fetches a new time stamp TS1+ from the synchronized time source. The procedure continues as shown in step 210. However, it will be appreciated that this time the source node may include the delay (Delay2) that has previously been determined (i.e. in step 180).

It is noted that the signalling and payload described in the example above may or may not pass through a Security Gateway (SEGW).

It is clear therefore, that the present invention in one embodiment also provides a method for determining the workload of a remote network element. This is achieved by sending a first message (e.g. an Echo Request message) from a source network element to the remote element, and receiving a second message (e.g. an Echo Response message) at the source element from the remote element. The second message contains an indication of the length of time between the first message being received, and the second message being sent, and thus provides an implicit indication of the workload of the remote network element. In order to achieve this, as described above, the priority of handling the first message may be set at any level that is equal to or less than that of a type of traffic that is to be evaluated (for example, by setting an appropriate DSCP for the first message). In this way, the second message is sent only after, or whilst, that type of traffic has been processed by the remote element, and therefore the delay at the remote element is a function of its workload of that type of traffic.

The indication may be derivable by the source network element, as described with respect to Figure 4.

In this embodiment, the first message includes a time stamp TS1 of the time at which it was sent by the source network element. On receiving the first message, the remote network element obtains another time stamp TS2, and calculates the time taken for the first message to reach the remote network element (Delay1). The second message then comprises a third time stamp TS3 of the time at which the second message was sent, and also Delay1. On receiving the second message, the source network element may then calculate the processing time T0 of the remote network element according to:

$$T0 = T3 - T1 - Delay1$$

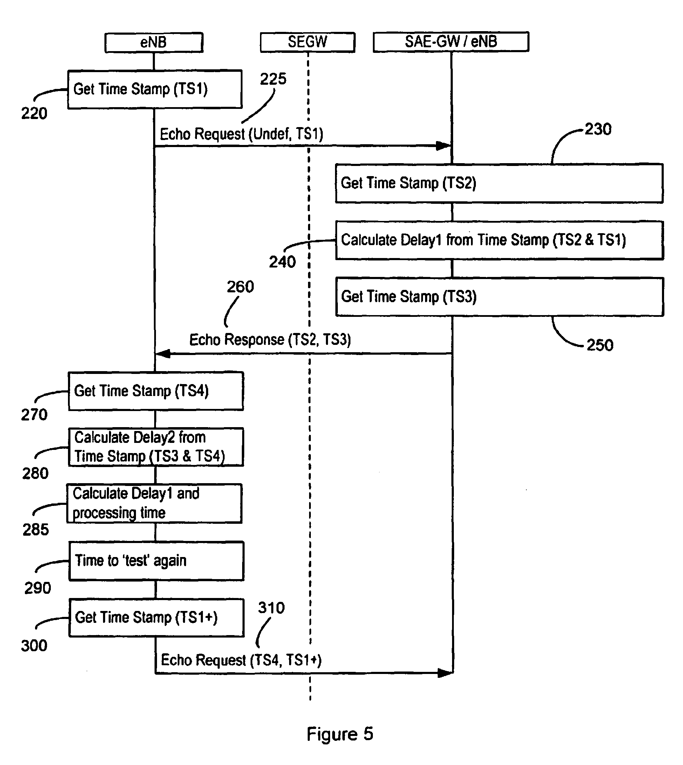

Figure 5 is a signalling diagram of an alternative embodiment of the present invention.

This embodiment is similar to that described with respect to Figure 4, and so like steps are not described in further detail. Steps 220, 225, 230, 240, 250, 270, 280, 290 and 300 are similar to steps 120, 125, 130, 140, 150, 170, 180, 190 and 200, respectively.

In step 260, the reply message sent by the target node includes the time stamps TS2 and TS3, rather than TS3 and Delay1. By replying with this information, the source node may calculate the processing time T0 in step 285 according to

$$T0 = T3 - T2$$

The source node may also calculate Delay1 with its knowledge of TS2 and TS1 (i.e. Delay1 = T2 - T1).

In step 310, the source node sends a message (e.g. an Echo Request message) with the time stamp TS4, as well as the new time stamp TS1+. This allows the target node to calculate the processing time at the source node (obtaining an implicit indication of the workload of the source node), as well as Delay2.

The examples in Figures 3, 4 and 5 show that an eNB starts the Echo request procedure. However, it could also be started from the SAE-GW (System Architecture Evolution Gateway), or the procedures could run from both nodes simultaneously or from one node only.

Furthermore, the methods described with respect to Figures 3, 4 and 5 may be employed in UTRANs, for example as shown in Figure 2 (i.e. a "flat" UTRAN architecture), or a traditional UTRAN architecture where the RNC is separate from the radio base station. In the former case, the target and source nodes may be any of radio base stations, SGSNs, or GGSNs, with messages according to the present invention travelling between the radio base station and the SGSN, or between the radio base station and the GGSN, if direct tunnelling is used; in the latter case, the target and source nodes may be any of RNCs, SGSNs, or GGSNs, with messages according to the present invention travelling between the RNC and the SGSN, or between the RNC and the GGSN, if direct tunnelling is used.

The present invention may, of course, be carried out in other ways than those specifically set forth herein without departing from essential characteristics of the invention. The present embodiments are to be considered in all respects as illustrative and not restrictive, and all changes coming within the meaning and equivalency range of the appended claims are intended to be embraced therein.

**Claims**

1. A method, in a first network element of a telecommunications network, for determining the workload of a second network element in the telecommunications network, said method comprising:

    sending (125, 225) a first message to a second network element, the first message having a priority in the second network element that is less than or equal to a priority in the second network element of handling a type of traffic; receiving a second message from the second network element, the second message comprising information regarding a period of time between the time at which said first message was received at the second network element, and the time at which said second message was sent from the second network element; and determining (185, 285) therefrom an indication of the workload of the second network element in handling the type of traffic.

2. A method as claimed in claim 1, wherein the information regarding the period of time comprises a first time stamp (TS2) of the time at which said first message was received at the second network element.

3. A method as claimed in claim 1 or 2, wherein the information regarding the period of time comprises a second time stamp (TS3) of the time at which said second message was sent from the second network element.

4. A method as claimed in claim 2 or 3, wherein said second network element obtains said time stamps from a synchronized time source.

5. A method as claimed in any one of claims 1-4, wherein said first message comprises a third time stamp (TS1).

6. A method as claimed in claim 5, wherein the information regarding the period of time comprises a measure of the time taken for said first message to reach the second network element (Delay1).

7. A method as claimed in claim 6, further comprising:

    calculating said period of time via the equation:

$$t = TS3 - TS1 - Delay1.$$

8. A method as claimed in any one of claims 1-7, wherein said first message is an Echo Request message.

9. A method as claimed in any one of claims 1-8, wherein said second message is an Echo Response message.

10. A method as claimed in claim 1, wherein the priority of the first message is set by setting a DiffServ Code Point (DSCP) of the first message.

11. A network element, for use in a telecommunications network, said network element comprising:

    means for sending a first message to a second network element, the first message having a priority in the second network element that is less than or equal to a priority in the second network element of handling a type of traffic; means for receiving a second message from the second network element, the second message comprising information regarding a period of time between the time at which said first message was received at the second network element, and the time at which said second message was sent from the second network element; and means for determining therefrom an indication of the workload of the second network element in handling the type of traffic.

12. A network element as claimed in claim 11, wherein said network element is one of: a radio base station; a System Architecture Evolution Gateway (SAE-GW); a serving GPRS support node (SGSN); a gateway GPRS support node (GGSN); and a radio network controller (RNC).

**Patentansprüche**

1. In einem ersten Netzelement eines Telekommunikationsnetzes erfolgendes Verfahren zur Bestimmung der Arbeitsbelastung eines zweiten Netzelements in dem Telekommunikationsnetz, wobei das Verfahren umfasst:

    Senden (125, 225) einer ersten Mitteilung an ein zweites Netzelement, wobei die erste Mitteilung eine Priorität der Abwicklung eines Verkehrstyps im zweiten Netzelement hat, die kleiner oder gleich der Priorität im zweiten Netzelement ist;

Empfangen einer zweiten Mitteilung vom zweiten Netzelement, wobei die zweite Mitteilung Information bezüglich eines Zeitabschnitts zwischen der Zeit, zu der die erste Mitteilung im zweiten Netzelement empfangen wurde, und der Zeit, zu der die zweite Mitteilung vom zweiten Netzelement gesendet wurde, umfasst; und daraus folgendes Bestimmen (185, 285) einer Angabe über die Arbeitsbelastung des zweiten Netzelements bei der Abwicklung des Verkehrstyps.

2. Verfahren nach Anspruch 1, wobei die Information bezüglich des Zeitabschnitts einen ersten Zeitstempel (TS2) der Zeit, zu der die erste Mitteilung im zweiten Netzelement empfangen wurde, umfasst.

3. Verfahren nach Anspruch 1 oder 2, wobei die Information bezüglich des Zeitabschnitts einen zweiten Zeitstempel (TS3) der Zeit, zu der die zweite Mitteilung vom zweiten Netzelement gesendet wurde, umfasst.

4. Verfahren nach Anspruch 2 oder 3, wobei das zweite Netzelement die Zeitstempel von einer synchronisierten Zeitquelle bezieht.

5. Verfahren nach einem der Ansprüche 1 bis 4, wobei die erste Mitteilung einen dritten Zeitstempel (TS1) umfasst.

6. Verfahren nach Anspruch 5, wobei die Information bezüglich des Zeitabschnitts ein Maß der Zeit umfasst, die die erste Mitteilung braucht, um das zweite Netzelement zu erreichen (Delay 1).

7. Verfahren nach Anspruch 6, ferner umfassend:

Berechnen des Zeitabschnitts anhand der Gleichung:

$$t = TS3 - TS1 - Delay1$$

8. Verfahren nach einem der Ansprüche 1 bis 7, wobei die erste Mitteilung eine Echoanforderungsmitteilung ist.

9. Verfahren nach einem der Ansprüche 1 bis 8, wobei die zweite Mitteilung eine Echoantwortmitteilung ist.

10. Verfahren nach Anspruch 1, wobei die Priorität der ersten Mitteilung festgelegt wird, indem ein DiffServ Code Point (DSCP) der ersten Mitteilung festgelegt wird.

11. Netzelement zur Verwendung in einem Telekommunikationsnetz, wobei das Netzelement umfasst:

Mittel zum Senden einer ersten Mitteilung an ein zweites Netzelement, wobei die erste Mitteilung eine Priorität der Abwicklung eines Verkehrstyps im zweiten Netzelement hat, die kleiner oder gleich der Priorität im zweiten Netzelement ist;
Mittel zum Empfangen einer zweiten Mitteilung vom zweiten Netzelement, wobei die zweite Mitteilung Information bezüglich eines Zeitabschnitts zwischen der Zeit, zu der die erste Mitteilung im zweiten Netzelement empfangen wurde, und der Zeit, zu der die zweite Mitteilung vom zweiten Netzelement gesendet wurde, umfasst; und
Mittel zum daraus folgendem Bestimmen einer Angabe über die Arbeitsbelastung des zweiten Netzelements bei der Abwicklung eines Verkehrstyps.

12. Netzelement nach Anspruch 11, wobei das Netzelement eines von Folgendem ist: eine Funkbasisstation; ein System Architecture Evolution Gateway (SAE-GW); ein Serving GPRS Support Node (SGSN); ein Gateway GPRS Support Node (GGSN); und ein Funknetz-Controller (RNC).

**Revendications**

1. Procédé, dans un premier élément de réseau d'un réseau de télécommunication, destiné à déterminer la charge de travail d'un second élément de réseau dans le réseau de télécommunication, ledit procédé comprenant les étapes ci-dessous consistant à :

envoyer (125, 225) un premier message à un second élément de réseau, le premier message ayant une priorité dans le second élément de réseau qui est inférieure ou égale à une priorité dans le second élément de réseau en vue du traitement d'un type de trafic ;
recevoir un second message en provenance du second élément de réseau, le second message comprenant des informations relatives à une période de temps entre l'instant où ledit premier message a été reçu au niveau du second élément de réseau et l'instant où ledit second message a été envoyé à partir du second élément de réseau ; et
déterminer (185, 285) à partir de cela une indication de la charge de travail du second élément de réseau en matière de traitement du type de trafic.

2. Procédé selon la revendication 1, dans lequel les informations connexes à la période de temps comportent une première estampille temporelle (TS2) de l'instant où ledit premier message a été reçu au niveau du second élément de réseau.

3. Procédé selon la revendication 1 ou 2, dans lequel les informations connexes à la période de temps comportent une deuxième estampille temporelle (TS3) de l'instant où ledit second message a été envoyé à partir du second élément de réseau.

4. Procédé selon la revendication 2 ou 3, dans lequel ledit second élément de réseau obtient lesdites estampilles temporelles à partir d'une source de temps synchronisée.

5. Procédé selon l'une quelconque des revendications 1 à 4, dans lequel ledit premier message comprend une troisième estampille temporelle (TS1).

6. Procédé selon la revendication 5, dans lequel les informations connexes à la période de temps comportent une mesure du temps nécessaire audit premier message pour atteindre le second élément de réseau (Delay 1).

7. Procédé selon la revendication 6, comprenant en outre l'étape ci-dessous consistant à :

    calculer ladite période de temps par le biais de l'équation ci-dessous :

$$t = TS3 - TS1 - Delay1.$$

8. Procédé selon l'une quelconque des revendications 1 à 7, dans lequel ledit premier message est un message de demande d'écho.

9. Procédé selon l'une quelconque des revendications 1 à 8, dans lequel ledit second message est un message de réponse d'écho.

10. Procédé selon la revendication 1, dans lequel la priorité du premier message est définie en configurant un point de code de services différenciés (DSCP) du premier message.

11. Élément de réseau destiné à être utilisé dans un réseau de télécommunication, ledit élément de réseau comprenant :

    un moyen pour envoyer un premier message à un second élément de réseau, le premier message ayant une priorité dans le second élément de réseau qui est inférieure ou égale à une priorité dans le second élément de réseau en vue du traitement d'un type de trafic ;
un moyen pour recevoir un second message en provenance du second élément de réseau, le second message comprenant des informations relatives à une période de temps entre l'instant où ledit premier message a été reçu au niveau du second élément de réseau et l'instant où ledit second message a été envoyé à partir du second élément de réseau ; et
un moyen pour déterminer à partir de cela une indication de la charge de travail du second élément de réseau en matière de traitement du type de trafic.

12. Élément de réseau selon la revendication 11, dans lequel ledit élément de réseau est l'un parmi les éléments ci-après : une station de base radio ; une passerelle d'évolution d'architecture de système (SAE-GW), un noeud de support GPRS de service (SGSN), un noeud de service GPRS de transit (GGSN) et un contrôleur de réseau radio (RNC).

Figure 1

Figure 2

Figure 3

| eNB | SEGW | SAE-GW / eNB |

**120** Get Time Stamp (TS1)   **125**

Echo Request (Undef, TS1)

**130**

Get Time Stamp (TS2)

Calculate Delay1 from Time Stamp (TS2 & TS1)

**140**

**160**

Get Time Stamp (TS3)

**150**

Echo Response (Delay1, TS3)

**170** Get Time Stamp (TS4)

**180** Calculate Delay2 from Time Stamp (TS3 & TS4)

**185** Calculate processing time

**190** Time to 'test' again

**200** Get Time Stamp (TS1+)   **210**

Echo Request (Delay2, TS1+)

Figure 4

| eNB | SEGW | SAE-GW / eNB |

Get Time Stamp (TS1)

220                    225

Echo Request (Undef, TS1)                    230

Get Time Stamp (TS2)

Calculate Delay1 from Time Stamp (TS2 & TS1)

240

260                    Get Time Stamp (TS3)

Echo Response (TS2, TS3)                    250

Get Time Stamp (TS4)

270

Calculate Delay2 from
Time Stamp (TS3 & TS4)

280

Calculate Delay1 and
processing time

285

Time to 'test' again

290

Get Time Stamp (TS1+)                    310

300

Echo Request (TS4, TS1+)

Figure 5

**EP 2 223 476 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5878032 A